# EUROPEAN PATENT SPECIFICATION

(11) **EP 0 614 774 B1**
(45) Date of publication and mention of the grant of the patent: **14.05.1997**
(21) Application number: 94301597.4
(22) Date of filing: 07.03.1994
(51) Int. Cl.: B60C 13/00, B60C 19/00

(54) **Pneumatic radial tyre**
Radialer Luftreifen
Bandage pneumatique radial

(30) Priority: 08.03.1993 JP 75217/93
(43) Date of publication of application: 14.09.1994
(73) Proprietor: Sumitomo Rubber Industries Ltd., Kobe-shi, Hyogo-ken (JP)
(72) Inventor: Yamashita, Fumikazu, Nishi-ku, Kobe-shi, Hyogo-ken (JP)
(74) Representative: Stewart, Charles Geoffrey

(56) References cited:
- EP-A- 0 367 556
- DE-A- 2 934 522
- DE-A- 3 042 350
- DE-A- 4 026 430
- DE-A- 4 120 878
- FR-A- 2 623 753

## Description

The present invention relates to a pneumatic radial tyre and more particularly to an improvement in a tyre sidewall to reduce tyre running noise.

Hitherto, in order to reduce the noise produced by a tyre during running, efforts were mainly to improve the tread pattern which is the region contacting the ground.

Recently, however, such improvements have almost reached the limit, and it becomes very difficult to further reduce running noise by improving the tread pattern alone.

For example, as shown in Table 1, which compares a low noise tyre having a well designed tread pattern and a tyre which has a smooth tread surface (no tread pattern is provided), the difference in noise level is very small.

**Table 1**

| Tyre | Patterned tyre | Smooth tyre |
|---|---|---|
| Noise level dB(A) | 73 | 70 |
| Tyre size 225/50R16 Coasting speed for measuring the noise 60km/H | | |

As a result of studies made by the inventor, it was discovered that the sidewall portions of a tyre vibrate during running and the sidewall portions themselves produce noise, and that the vibrations of the sidewall portion are transmitted to the tread portion to excite the air in the tread grooves which produces a noise as air resonance noise.

Accordingly, the inventor realized that it is very important to effectively reduce the running noise to reduce vibrations of the sidewall portions in addition to improving the tread pattern.

A radial tyre according to the preamble of claim 1 and having a rubber lining strip in the sidewall between the carcass plies and the inner liner is known, e.g. from DE-A-4026430. In this known tyre, however, the presence of the rubber lining strip is directed to improving the tyre durability in running in a deflated condition.

It is therefore, an object of the present invention to provide a pneumatic radial tyre, in which vibrations of the sidewall portions are effectively damped to reduce the running noise.

According to the present invention, a pneumatic radial tyre comprises a tread portion, a pair of bead portions with a bead core disposed therein, a pair of sidewall portions, a toroidal carcass having a carcass ply of radially arranged organic fibre cords extending between the bead portions and turned up around the bead cores, a bead apex made of hard rubber disposed between the main carcass portion and each turned up portion, a belt having two crossed belt plies disposed radially outside the carcass, and an airtight inner liner made of rubber covering the inside of the carcass, each of said sidewall portions being provided with a lining strip of a rubber composition having a loss tangent of from 0.15 to 0.25, characterised in that the lining strip is provided on the inner surface of said airtight inner liner and has a radially inner edge located at a radial height HL of from 0.20 to 0.30 times the tyre section height and a radially outer edge located at a radial height HU of from 0.70 to 0.85 times the tyre section height, and the lining strip extends continuously from the inner edge to the outer edge, the radially outer edge portion and the radially inner edge portion of the lining strip are tapered, and the main portion therebetween has a substantially constant thickness of 0.15 to 0.55 times the remaining thickness and in the range of from 1 to 4mm when measured at the maximum tyre sectional width point, the remaining thickness being the total thickness of the sidewall portion minus said thickness of the main portion.

Embodiments of the present invention will now be described in detail in conjunction with the accompanying drawings, in which:
Fig.1 is a cross sectional view showing a left half of a tyre according to the present invention;
Fig.2 is a diagram showing a vibration mode thereof;
Fig.3 is a diagram showing a vibration mode of a reference tyre;
Fig.4 is a cross sectional view showing a left half of a reference tyre;
Fig.5 is a graph showing a frequency spectrum; and
Fig.6 is a diagram explaining the analyzing method for vibrations and noise.

In the figures, the pneumatic radial tyre 1 comprises a pair of axially spaced bead portions 4, a tread portion 2, and a pair of sidewall portions 3 extending radially inwardly from the tread edges to the bead portions in its normal inflated state mounted on its regular rim J and inflated to normal pressure.

The pneumatic radial tyre 1 comprises a carcass 6 and a belt 7. The carcass 6 has a main portion 6A extending between the bead portions 4 through the tread portion 2 and sidewall portions 3, and a pair of turned up portions 6b turned up around the bead cores 5 from the axially inner side to the outside the tyre. The belt 7 is disposed radially outside the carcass 6 and inside the tread portion.

The carcass 6 in this embodiment consists of two plies 6A and 6B, each of which is composed of organic fibre cords, such as nylon, polyester, rayon, aromatic polyamide or the like, which are arranged radially at an angle of from 75 to 90 degrees with respect to the tyre equator C to provide a radial or semiradial construction. The cords of one carcass ply 6A cross the cords of the other carcass ply 6B, and the cords are coated with a topping rubber.

Between the carcass main portion 6a and each of the turned up portions 6b, a bead apex 8 is disposed. The bead apex 8 extends radially outwardly from the radially outside of the bead core 5.

In this embodiment, the height Hb of the radially outer edge of the turned up portions 6b from the bead base line is larger than the height Ha of the radially outer edge of the bead apex 8.

The belt 7 consists of a radially inner belt ply 7A and a radially outer belt ply 7B, each of which is made of belt cords inclined at an angle of from 10 to 40 degrees with respect to the tyre equator C so that the cords of the belt ply 7A cross the cords of the belt ply 7B. The belt cords are coated with a topping rubber. For the belt cords, steel cords or organic fibre cords, e.g. nylon, polyester, rayon, aromatic polyamide or the like can be used.

In this embodiment, steel belt cords are used, and the width WB of the inner belt ply 7B is in the range of from 0.8 to 1.1 times the tread width WT, and the outer belt ply 7B is slightly narrower than the inner belt ply 7A. If the width WB is less than 0.8 times the tread width WT, the rigidity becomes insufficient for the tread shoulder region. If the width is more than 1.1 times WT, the rubber thickness around the buttress part 3a of the tyre shoulder 3 becomes small, and this part is liable to failure.

Accordingly, the belt cords and the carcass cords form a stiff triangulated structure to provide sufficient rigidity for the tread portion, and the occurrence of vibrations of the tread portion during running is controlled to reduce the running noise.

Further, the pneumatic radial tyre 1 comprises a tread rubber TR disposed radially outside the belt 7 in the tread portion 2, a sidewall rubber SW disposed axially outside the carcass in each of the sidewall portions 3, and an air impermeable inner liner rubber IL disposed on the inside of the main portion 6a of the carcass 6 to completely cover the inner surface 10 of the tyre.

Table 2 shows examples of the recipes for the tread rubber TR, sidewall rubber SW, inner liner rubber IL, carcass topping rubber CT, belt topping rubber BT, and bead apex rubber BA.

According to the invention, the tyre is provided with a lining strip 9 in each of the sidewall portions 3. The lining strip 9 is disposed on the inner surface of the airtight inner liner IL, and the radially inner edge (A) thereof is located at a radial height HL of 0.20 to 0.30 times the tyre section height H. The radially outer edge B is located at a radial height HU of 0.70 to 0.85 times the tyre section height H. Each height is measured from the bead base line L. The lining strip 9 extends continuously between its edges (A and B), in contact with the airtight inner liner IL.

The lining strip 9 is made of a rubber composition having a loss tangent (tan δ) of from 0.15 to 0.25. Some examples A-E of the recipes for such rubber are shown in Table 3.

In contrast therewith, the above-mentioned sidewall rubber SW has a lower loss tangent, for example 0.12 to 0.15 in this embodiment. If the loss tangent of the sidewall rubber is high, heat generation therefrom increases, and the rubber is liable to be broken especially during high speed running.

The thickness (T) of the lining strip 9 is substantially constant, except for the radially inner and outer edge portions thereof which are tapered towards the actual edges. The thickness (T) is preferably in the range of 0.15 to 0.55 times the remaining thickness (t), wherein the remaining thickness (t) equals to the total thickness of the sidewall portion - (minus) the thickness (T). In this example, the thickness (T) at the maximum tyre section width point M is in the range of from 1 to 4 mm.

The lining strip 9 and the above-mentioned other rubber compounds are adhered integrally by means of vulcanisation.

By specifically selecting the loss tangent as above, vibrations of the sidewall portions are effectively damped by the lining strip to reduce the noise.

If the loss tangent is less than 0.15, the lining strip does not damp vibrations and the noise is not reduced. If the loss tangent is more than 0.25, heat generation increases in the sidewall portions and durability is decreased.

If the height HL is less than 0.20 times the tyre section height H, the rigidity of the bead portion is increased and the ride comfort is deteriorated. If the height HL is more than 0.30 times H, the vibrations can not be damped and the noise can not be reduced.

If the height HU is less than 0.7 times the tyre section height H, the vibrations can not be damped and the noise can not be reduced. If the height HU is more than 0.85 times H, the radially outer edge of the lining strip extends into the tread shoulder region, which disturb the balance of tread rigidity, and the steering stability of the tyre is deteriorated.

The present invention is suitably applied to a passenger tyre to be mounted on a 13 to 18 inch dia. rim, which has therefore, a tyre section height H of not less than 120 mm. Further, usually, the vibration is liable to occur in a high aspect ratio tyre than in a low aspect ratio tyre, so the invention is particularly applicable to a tyre having an aspect ratio of more than 65%.

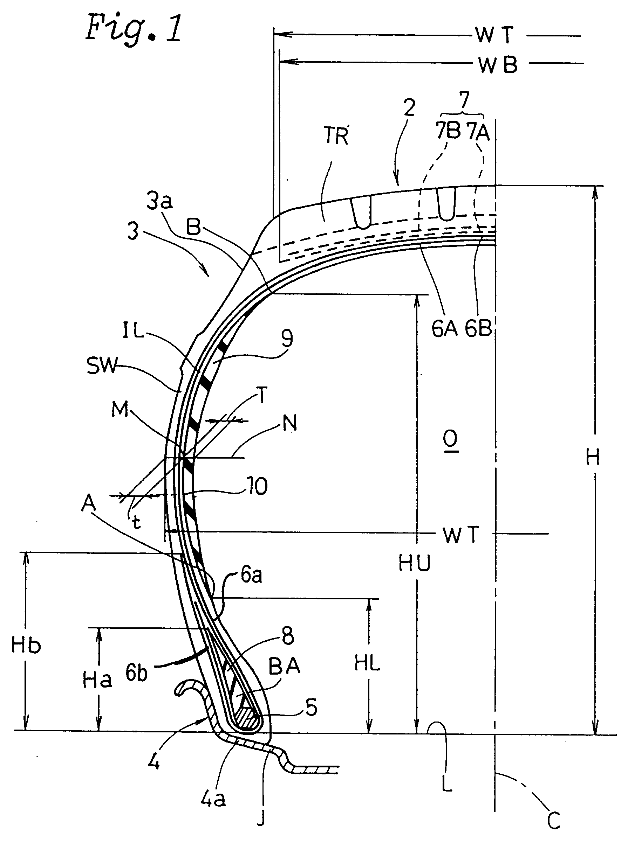

Test tyres having the construction shown in Fig.1 were made and tested for running noise and ride comfort. The specifications and test results are shown in Table 4.

In the running noise test, the maximum noise sound level in dB(A) was measured at a speed of 53km/h according to the JASO-C606 procedure. The results are indicated by an index based on reference tyre 1 being 100, wherein the larger the value, the smaller the noise.

The ride comfort was evaluated by a test driver. The results are indicated by an index based on that reference tyre 1 being 100, wherein the larger the value, the better the ride comfort.

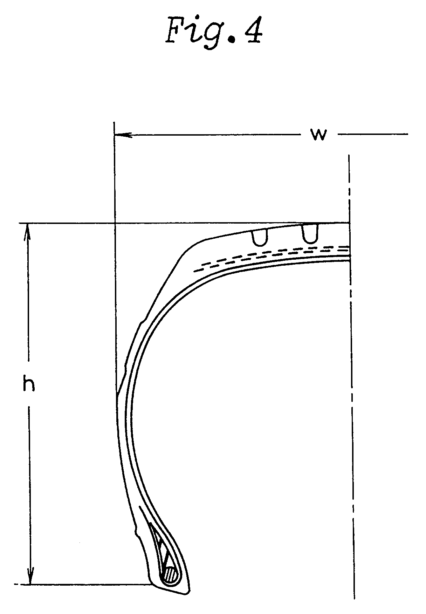

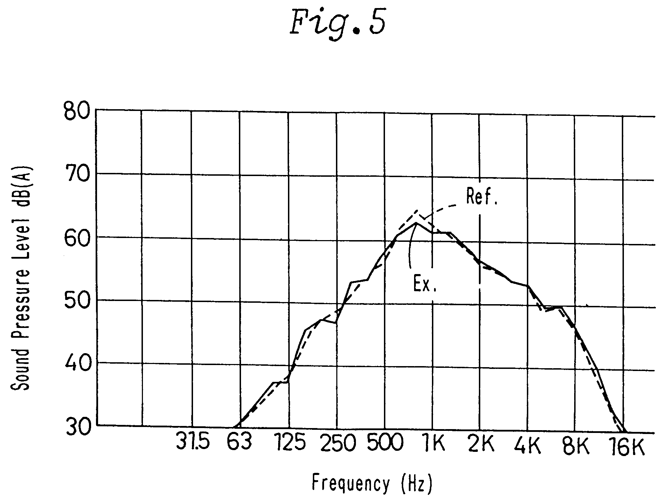

The frequency spectrum of the running noise for Ex.3 tyre (Fig.1) and Ref.1 tyre (Fig.4) are shown in Fig.5.

With respect to the peak level frequency at which the noise sound pressure level was maximum, the example tyre became lower than the reference tyre, that is, the frequency was decreased from 798Hz to 780 Hz.

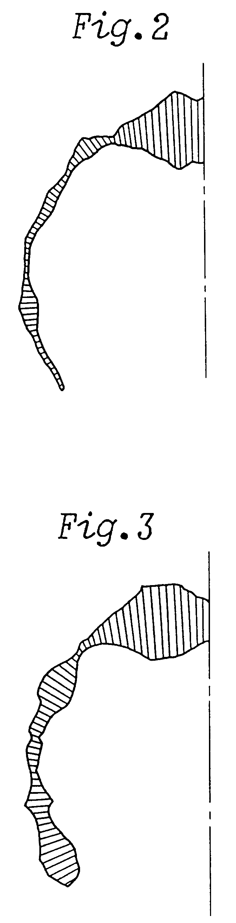

Further, the vibration mode pattern at the peak level frequency (780Hz) of the example tyre is shown in Fig.2, and that of the reference tyre (at 798Hz) is shown in Fig.3.

As shown in Fig.2 and Fig.3, it was confirmed that vibrations of the sidewall portion were damped by the lining strip, and the amplitude of vibration was effectively decreased.

Throughout the tests, it was confirmed that running noise was effectively reduced because the provision of the above-mentioned lining strip which decreased the transmission from the tread portion to the sidewall portion, of vibrations in the range of 600 to 1000 Hz, and changed the peak level frequency away from the most sensitive range of 800 to 1000 Hz.

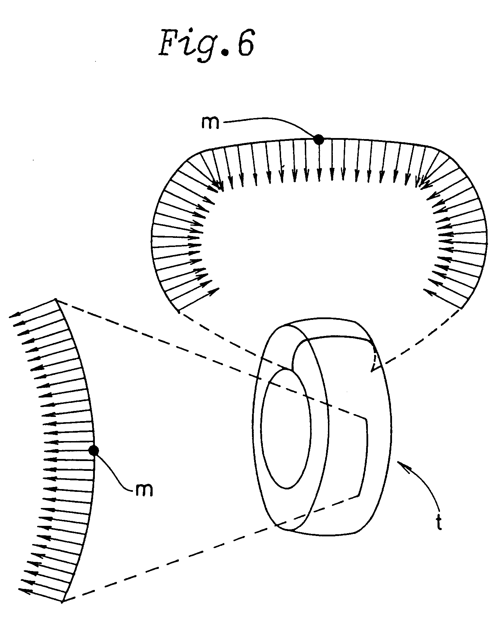

Incidentally, the above-mentioned vibration mode pattern was obtained as follows. The test tyre was vibrated by applying a vibrator to the tread shoulder portion, and the vibration was measured at intervals of 10 mm as shown in Fig.6 using an acceleration sensor. Then, the data was processed using a frequency analyser and a computer to provide the graphical as results shown in Figs.2 and 3.

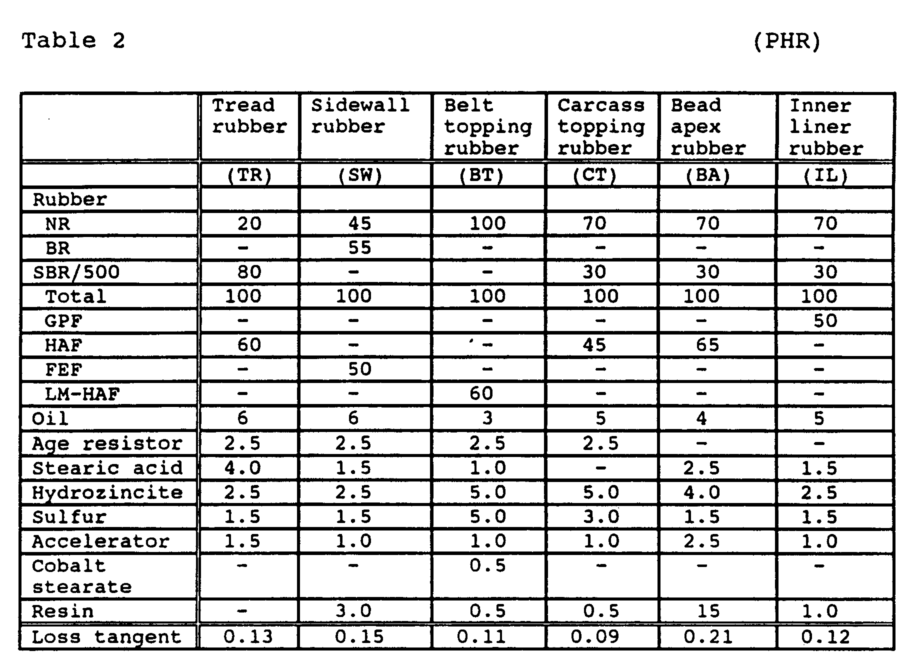

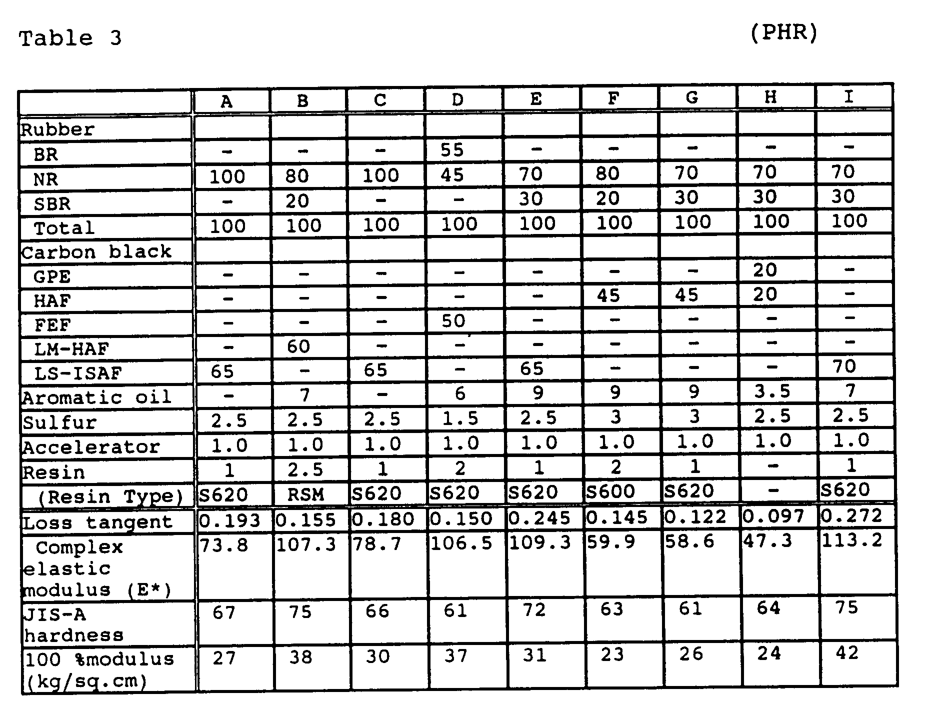

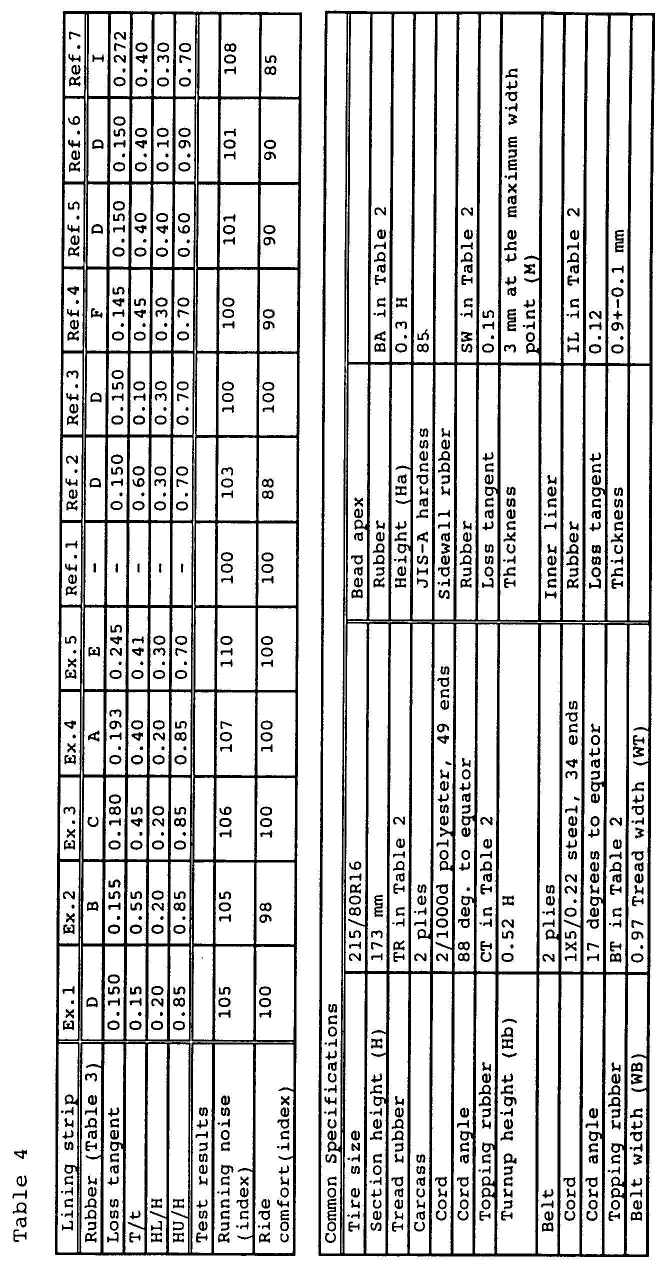

## Claims

1. A pneumatic radial tyre comprising a tread portion (2), a pair of bead portions (4) with a bead core (5) disposed therein, a pair of sidewall portions (3), a toroidal carcass (6) having a carcass ply of radially arranged organic fibre cords extending between the bead portions (4) and turned up around the bead cores (5), a bead apex (8) made of hard rubber disposed between the main carcass portion (6a) and each turned up portion (6b), a belt (7) having two crossed belt plies (7A,7B) disposed radially outside the carcass (6), and an airtight inner liner (IL) made of rubber covering the inside (10) of the carcass, each of said sidewall portions (3) being provided with a lining strip (9) of a rubber composition having a loss tangent of from 0.15 to 0.25, characterised in that the lining strip is provided on the inner surface of said airtight inner liner (IL) and has a radially inner edge (A) located at a radial height HL of from 0.20 to 0.30 times the tyre section height (H) and a radially outer edge (B) located at a radial height HU of from 0.70 to 0.85 times the tyre section height (H), and the lining strip (9) extends continuously from the inner edge (A) to the outer edge (B), the radially outer edge portion and the radially inner edge portion of the lining strip are tapered, and the main portion therebetween has a substantially constant thickness (T) of 0.15 to 0.55 times the remaining thickness (t) and in the range of from 1 to 4mm when measured at the maximum tyre sectional width point, the remaining thickness (t) being the total thickness of the sidewall portion minus said thickness (T) of the main portion.

## Patentansprüche

1. Pneumatischer Radialreifen mit einem Laufflächenabschnitt (2), einem Paar von Wulstabschnitten (4) mit einem darin angeordneten Wulstkern (5), einem Paar von Seitenwandabschnitten (3), einer torusförmigen Karkasse (6) mit einer Karkasseneinlage aus radial angeordneten, organischen Fasercorden, die sich zwischen den Wulstabschnitten (4) erstreckt und um die Wulstkerne (5) herum umgeschlagen ist, einem Kernreiter (8), der aus Hartgummi gefertigt ist, der zwischen dem Hauptkarkassenabschnitt (6a) und jedem umgeschlagenen Abschnitt (6b) angeordnet ist, einem Gürtel (7) mit zwei überkreuzten Gürteleinlagen (7A, 7B), der radial außerhalb der Karkasse (6) angeordnet ist, und einer luftdichten, inneren Ausfütterung (IL), die aus Gummi gefertigt ist, die das Innere (10) der Karkasse bedeckt, wobei jeder der Seitenwandabschnitte (3) mit einem ausfütternden Streifen (9) aus einer Gummimischung mit einer Verlusttangente von 0,15 bis 0,25 versehen ist,
dadurch gekennzeichnet,
daß der ausfütternde Streifen auf der inneren Oberfläche der luftdichten, inneren Ausfütterung (IL) vorgesehen ist und einen radial inneren Rand (A), der bei einer radialen Höhe (HL) von 0,20 bis 0,30 mal der Reifenquerschnittshöhe (H) angeordnet ist und einen radial äußeren Rand (B), der bei einer radialen Höhe (HU) von 0,70 bis 0,85 mal der Reifenquerschnittshöhe (H) angeordnet ist, aufweist, und der ausfütternde Streifen (9) sich kontinuierlich von dem inneren Rand (A) zu dem äußeren Rand (B) erstreckt, der radial äußere Randabschnitt und der radial innere Randabschnitt des ausführenden Streifens verjüngt sind, und der Hauptabschnitt dazwischen eine im wesentlichen konstante Dicke (T) von 0,15 bis 0,55 mal der verbleibenden Dicke (t) aufweist und in dem Bereich von 1 bis 4 mm liegt, wenn bei dem Punkt der maximalen Reifenquerschnittbreite gemessen ist, wobei die verbleibende Dicke (t) die Gesamtdicke des Seitenwandabschnitts minus der Dicke (T) des Hauptabschnitts ist.

## Revendications

1. Pneumatique à carcasse radiale comprenant une partie (2) de bande de roulement, une paire de parties (4) de talon ayant une tringle (5) placée à l'intérieur, deux parties (3) de flanc, une carcasse toroïdale (6) ayant une nappe de carcasse formée de câblés de fibres organiques disposés radialement, placés entre les parties de talon (4) et repliés autour des tringles (5), une pointe (8) de bourrage de talon formée de caoutchouc dur et placée entre la partie principale de carcasse (6a) et chaque partie repliée (6b), une ceinture (7) ayant deux nappes croisées (7A, 7B), disposée radialement à l'extérieur de la carcasse (6), et un revêtement interne hermétique (IL) formé de caoutchouc et recouvrant l'intérieur (10) de la carcasse, chacune des parties (3) de flanc ayant une bande de revêtement (9) formée d'une composition de caoutchouc donc la tangente à l'angle de pertes est comprise entre 0,15 et 0,25, caractérisé en ce que la bande de revêtement est disposée à la face interne du revêtement interne hermétique (IL) et a un bord radialement interne (A) placé à une hauteur radiale HL comprise entre 0,20 et 0,30 fois la hauteur (H) en coupe du pneumatique et un bord radialement externe (B) placé à une hauteur radiale HU comprise entre 0,70 et 0,85 fois la hauteur (H) en coupe du pneumatique, et la bande de revêtement (9) est disposée de façon continue du bord interne (A) au bord externe (B), la partie de bord radialement externe et la partie radialement interne de la bande de revêtement sont inclinées, et la partie principale intermédiaire a une épaisseur pratiquement constante (T) comprise entre 0,15 et 0,55 fois l'épaisseur restante (t) et comprise entre 1 et 4 mm lorsqu'elle est mesurée au point de largeur maximale en coupe du pneumatique, l'épaisseur restante (t) étant l'épaisseur totale de la partie de flanc réduite de l'épaisseur (T) de la partie principale.
